# EUROPEAN PATENT SPECIFICATION

(11) **EP 3 327 843 B1**
(45) Date of publication and mention of the grant of the patent: **16.03.2022**
(21) Application number: 16827558.4
(22) Date of filing: 24.06.2016
(51) Int. Cl.: H01M 8/0202, H01M 8/0271, H01M 8/10, B29C 43/00, B29K 63/00, H01M 8/0213, H01M 8/026, H01M 8/0226

(54) **METHOD FOR MANUFACTURING FUEL CELL SEPARATOR**
VERFAHREN ZUR HERSTELLUNG EINES BRENNSTOFFZELLENSEPARATORS
PROCÉDÉ DE FABRICATION D'UN SÉPARATEUR DE PILE A COMBUSTIBLE

(30) Priority: 22.07.2015 JP 2015144654
(43) Date of publication of application: 30.05.2018
(73) Proprietor: Nisshinbo Chemical Inc., Chuo-ku Tokyo 103-8650 (JP)
(72) Inventor: TANNO Fumio, Chiba-shi Chiba 267-0056 (JP)
(74) Representative: Mewburn Ellis LLP
(86) International application number: PCT/JP2016/068784
(87) International publication number: WO 2017/013994

(56) References cited:
- EP-A1- 2 264 817
- WO-A1-2009/113717
- WO-A1-2012/032922
- CA-A1- 2 900 323
- JP-A- 2006 019 252
- JP-A- 2011 150 858
- JP-A- 2011 150 858
- JP-A- 2011 150 858
- JP-A- 2014 154 475
- US-A1- 2014 093 660
- US-B2- 8 105 721

## Description

### TECHNICAL FIELD

The present invention relates to a method for manufacturing a fuel cell separator, more specifically to a method for manufacturing a fuel cell separator including a gasket.

### BACKGROUND ART

A fuel cell separator plays a role of imparting conductivity to each unit cell, secures a passage of fuel and air (oxygen) supplied to the unit cell, and plays a role as a partition therebetween.

Therefore, various properties such as high electrical conductivity, high gas impermeability, chemical stability, heat resistance, and hydrophilic properties are required for the separator.

Such a separator may be subjected to a blast treatment for removing a skin layer or adjusting surface roughness, a hydrophilic treatment for improving hydrophilic properties, and the like, and a gasket for sealing may be laminated on a peripheral edge part of the separator as necessary.

For example, Patent Document 1 discloses a method for manufacturing a fuel cell separator, including laminating a gasket on a fuel cell separator, and then subjecting the separator and the gasket as a whole to a blast treatment, and subsequently to a hydrophilization treatment.

However, in a fuel cell separator obtained by this method, a releasing agent component remains on a surface of the separator between the separator and the gasket, and this releasing agent component may cause poor adhesion between the separator and the gasket, or may cause peeling of the gasket during operation.

In addition, a surface of the gasket is also subjected to a blast treatment, and therefore gas leakage may occur due to breakage of the gasket or abrasive grains remaining on the surface of the gasket.

Patent Document 2 discloses, as an example of a method for sealing a fuel cell separator, a method for forming a sealing material by removing a hydrophilic layer formed on a sealing part, then filling a portion between a sealing part of an anode electrode fuel cell separator and a sealing part of a cathode electrode fuel cell separator with, for example, a thermosetting resin such as an epoxy-based resin, a silicone-based resin, or a fluorine-based resin, and curing the thermosetting resin or the like.

However, as in this method, if adhesion between the fuel cell separator and a gasket or a sealing plate is performed after a hydrophilic treatment, a hydrophilic surface may be contaminated or a hydrophilic group may be decreased or eliminated to decrease hydrophilic properties.

### PRIOR ART DOCUMENTS

### PATENT DOCUMENTS

Patent Document 1: JP-A 2013-222521
Patent Document 2: JP 5380771
Patent Document 3: JP 2011 150858 A

### SUMMARY OF INVENTION

### TECHNICAL PROBLEM

The present invention has been achieved in view of the above circumstances, and an object of the present invention is to provide a method for manufacturing a fuel cell separator, providing a separator having excellent adhesion between a gasket and the separator, preventing a decrease in hydrophilic properties due to gasket lamination, and having excellent sealing properties.

### SOLUTION TO PROBLEM

As a result of intensive studies to achieve the above object, the present inventor has found that, in manufacturing a fuel cell separator with a gasket, by roughening a preform, then forming a gasket, and further performing a laser irradiation treatment and a hydrophilization treatment, it is possible to obtain a fuel cell separator having excellent adhesion between the gasket and the separator, preventing a decrease in hydrophilic properties due to gasket lamination, and having excellent sealing properties, and have completed the present invention.

That is, the present invention as set out in claims 1-7.

### ADVANTAGEOUS EFFECTS OF INVENTION

The method for manufacturing a fuel cell separator according to the present invention can provide a fuel cell separator with a gasket having excellent hydrophilic properties lasting for a long period of time, further having high adhesion between the gasket and the separator, and hardly causing peeling of the gasket even in a high temperature and high humidity environment during operation of a fuel cell.

### DESCRIPTION OF EMBODIMENTS

Hereinafter, the present invention is described in more detail.

A method for manufacturing a fuel cell separator according to the present invention includes the following steps (A) to (E) as detailed in claim 1.

### (A) Press molding step

In this step, a composition containing a graphite powder, an epoxy resin, and a phenol resin is press-molded under heat in a mold to obtain a molded article having a groove serving as a gas channel on one or both surfaces.

The graphite powder used in the present invention may be appropriately selected for use from graphite powders conventionally used for a fuel cell separator.

Specific examples thereof include natural graphite, artificial graphite obtained by firing acicular coke, artificial graphite obtained by firing bulk coke, a pulverized electrode, coal-based pitch, petroleum-based pitch, coke, activated carbon, glassy carbon, acetylene black, and Ketjen black. These graphite powders can be used singly or in combination of two or more kinds thereof.

An average particle diameter d₅₀ of the graphite powder is not particularly limited, but is preferably 10 to 200 µm, and more preferably 25 to 140 µm considering that a void between graphite particles is kept appropriate, a contact area between the graphite particles is increased, and occurrence of irregularities after a laser treatment is suppressed to increase conductivity (to reduce contact resistance).

That is, when the average particle diameter d₅₀ of the graphite powder is 10 µm or more, a resin in a surface layer of a molded article can be eliminated to improve conductivity of a surface of the separator when the molded article is irradiated with infrared laser light, and a contact area between the graphite particles in the separator can be kept sufficient. Therefore, conductivity in a thickness direction of the separator can be also improved. If the average particle diameter d₅₀ is 200 µm or less, a void between the graphite particles is appropriate. Therefore, even if a resin filled in the void between the graphite particles on a surface of the separator is eliminated by laser irradiation, large irregularities are not formed on the surface of the separator, and as a result, contact resistance of the separator is reduced and conductivity of the separator itself is not deteriorated.

The epoxy resin is not particularly limited as long as having an epoxy group. Examples thereof include an o-cresol novolak type epoxy resin, a phenol novolak type epoxy resin, a bisphenol A type epoxy resin, a bisphenol F type epoxy resin, a biphenyl type epoxy resin, a biphenyl aralkyl type epoxy resin, a trisphenol type epoxy resin, a brominated epoxy resin, a dicyclopentadiene type epoxy resin, and a biphenyl novolac type epoxy resin. These resins can be used singly or in combination of two or more kinds thereof. Among these resins, the o-cresol novolak type epoxy resin and the phenol novolak type epoxy resin are preferable, and the o-cresol novolak type epoxy resin is more preferable.

An epoxy equivalent of the epoxy resin is preferably 158 to 800 g/eq, more preferably 185 to 450 g/eq, and still more preferably 190 to 290 g/eq considering that heat resistance of an obtained fuel cell separator is further enhanced.

Furthermore, ICI viscosity of the epoxy resin at 150°C is preferably 0.01 to 5.8 Pa·s, more preferably 0.02 to 2.0 Pa·s, and still more preferably 0.04 to 1.2 Pa·s considering that heat resistance of an obtained fuel cell separator is further enhanced and molding processability is improved.

The phenol resin acts as a curing agent for the epoxy resin. Specific examples thereof include a novolac type phenol resin, a cresol type phenol resin, an alkyl-modified phenol resin, a biphenyl aralkyl type epoxy resin, and a trisphenol type epoxy resin. These resins can be used singly or in combination of two or more kinds thereof.

A hydroxy group equivalent of the phenol resin is not particularly limited, but is preferably 95 to 240 g/eq, and more preferably 103 to 115 g/eq considering that heat resistance of an obtained separator is further enhanced.

Furthermore, ICI viscosity of the phenol resin at 150°C is preferably 0.02 to 0.70 Pa·s, more preferably 0.10 to 0.60 Pa·s, and still more preferably 0.20 to 0.50 Pa·s considering that heat resistance of an obtained fuel cell separator is further enhanced and molding processability is improved.

In addition to the above components, an optional component such as a curing accelerator or an internal releasing agent can be appropriately blended with the composition used in the present invention.

The curing accelerator is not particularly limited as long as accelerating a reaction between an epoxy group and a curing agent. Examples thereof include triphenylphosphine, tetraphenylphosphine, diazabicycloundecene, dimethylbenzylamine, 2-methylimidazole, 2-methyl-4-imidazole, 2-phenylimidazole, 2-phenyl-4-methylimidazole, 2-undecylimidazole, and 2-heptadecylimidazole. These compounds can be used singly or in combination of two or more kinds thereof.

The internal releasing agent is not particularly limited. Examples thereof include various internal releasing agents conventionally used for molding a separator. Examples thereof include a stearic acid-based wax, an amide-based wax, a montanic acid-based wax, a carnauba wax, and a polyethylene wax. These compounds can be used singly or in combination of two or more kinds thereof.

The total content of the epoxy resin and the phenol resin in the composition is not particularly limited, but is preferably 10 to 50 parts by mass, and particularly preferably 15 to 35 parts by mass with respect to 100 parts by mass of the graphite powder.

In this case, 0.98 to 1.08 hydroxy group equivalent of the phenol resin is preferably blended with the epoxy resin.

In a case of using the internal releasing agent, the use amount thereof is not particularly limited, but is preferably 0.1 to 1.5 parts by mass, and particularly preferably 0.3 to 1.0 part by mass with respect to 100 parts by mass of the graphite powder.

In a case of further using the curing accelerator, the use amount thereof is not particularly limited, but the curing accelerator is preferably blended in an amount of 0.5 to 1.2 parts by mass with respect to 100 parts by mass of a mixture of the epoxy resin and the phenol resin.

For preparing the composition, for example, it is only required to mix the graphite powder, the epoxy resin, and the phenol resin at a predetermined ratio in arbitrary order. In this case, examples of a mixer include a planetary mixer, a ribbon blender, a ladyge mixer, a Henschel mixer, a rocking mixer, and a Nauter mixer.

In addition, in a case of using an optional component such as a curing accelerator or an internal releasing agent, mixing order thereof is also arbitrary.

In the present invention, the composition is put in a predetermined mold and press-molded to manufacture a preform. As a mold to be used, a mold for manufacturing a fuel cell separator, capable of forming a groove serving as a gas channel on one or both surfaces of a molded article, is used.

Conditions for press molding are not particularly limited. However, a mold temperature is 80 to 200°C, a molding pressure is 1.0 to 50 MPa, and preferably 5.0 to 40 MPa, molding time is 10 seconds to 1 hour, preferably 20 to 180 seconds, and more preferably from 30 to 90 seconds.

Note that heating may be further performed at 150 to 200°C for 1 to 600 minutes after press molding in order to accelerate thermal curing.

### (B) Roughening Step

This step is a step for roughening the entire both surfaces of the molded article obtained above.

A method for performing the roughening treatment is not particularly limited, and may be appropriately selected from various roughening methods such as a conventionally known blast treatment and polishing treatment. However, an air blast treatment, a wet blast treatment, a barrel polishing treatment, and a brush polishing treatment are preferable. The blast treatment using abrasive grains is more preferable. The wet blast treatment is still more preferable.

In this case, an average particle diameter (d = 50) of abrasive grains used for the blast treatment is preferably 3 to 30 µm, more preferably 4 to 25 µm, and still more preferably 5 to 20 µm.

Examples of a material of the abrasive grains used in the blast treatment include alumina, silicon carbide, zirconia, glass, nylon, and stainless steel. These materials can be used singly or in combination of two or more kinds thereof.

A discharge pressure during the wet blast treatment varies depending on the particle diameters of the abrasive grains and the like, and therefore cannot be unconditionally defined, but is preferably 0.1 to 1 MPa, and more preferably 0.15 to 0.5 MPa.

### (C) Gasket Formation Step

This step is a step for forming a gasket on a peripheral edge part (sealing part) of a gas channel surface having the groove serving as a gas channel in the molded article roughened in step (B).

Incidentally, in a separator having grooves on both surfaces serving as gas channel surfaces, gaskets are formed on both surfaces. In a separator in which one surface serves as a gas channel surface, in a case where sealing properties are required also for the opposite surface (cooling surface), a gasket may be formed on a peripheral edge part of the cooling surface as necessary. In a case where gaskets are formed on both surfaces, the gaskets may be formed on one surface and then formed on the other surface, or the gaskets may be formed on both surfaces at the same time.

It is only required to appropriately select a material used for forming the gasket from materials conventionally used as a gasket material of a separator.

Specific examples thereof include a rubber material such as a natural rubber, a silicone rubber, a SIS copolymer, a SBS copolymer, SEBS, an ethylene-propylene rubber, an ethylene-propylene-diene rubber, an acrylonitrile-butadiene rubber, a hydrogenated acrylonitrile-butadiene rubber, a chloroprene rubber, an acrylic rubber, a fluorine-based rubber, a butyl rubber, a hydrogenated isobutylene rubber, or a hydrogenated butadiene rubber.

Examples of a method for forming a gasket include a method for bonding or fusing a gasket previously formed into a sheet shape or a plate shape to the peripheral edge part (sealing part) of a molded article, and a method for applying a composition containing the rubber material onto a surface of the peripheral edge part of the molded article and then curing the composition to form a gasket. The latter method for applying and then curing a composition is preferable.

An application method is not particularly limited, and examples thereof include a drop casting method, a spin coating method, a blade coating method, a roll coating method, a bar coating method, a die coating method, an ink jet method, and a printing method (flexographic printing, gravure printing, lithographic printing, screen printing, or the like). The printing method is preferable, and the screen printing method is more preferable.

It is only required to appropriately select a curing method from conventionally known vulcanization methods such as heating and irradiation with radiation such as an electron beam.

### (D) Laser Irradiation Step

This step is a step for irradiating a portion of the gas channel surface where the gasket is not formed in the molded article with a gasket obtained in step (C), with infrared laser light.

In this case, a bottom part (recess) and a peak part (projection) of a groove of the gas channel are indispensably irradiated with infrared laser light. Irradiation with laser light is performed while the entire part where the gasket is not formed on the gas channel surface, is irradiated with laser light.

Note that the above cooling surface may also be irradiated with laser light as necessary. Also in this case, in a case where a gasket is formed, a part where the gasket is not formed is irradiated with laser light.

A gasket part not requiring irradiation may be masked, and then irradiation with laser light may be performed.

A laser used in the laser irradiation step is not particularly limited, and examples thereof include a YAG laser, a carbon dioxide gas laser, a dye laser, a semiconductor laser, and a fiber laser. The fiber laser is preferable from viewpoints of depth of focus, convergence, and lifetime of a transmitter.

A wavelength of the infrared laser light is not particularly limited, but is preferably 780 to 10,600 nm, more preferably 808 to 1,095 nm, and still more preferably 920 to 1,070 nm.

As preferable irradiation conditions of the infrared laser light, an output is 100 to 250 W, and a pulse width is 30 to 200 ns.

Pulse energy of the infrared laser light is preferably 5 to 30 mJ, and more preferably 5 to 20 mJ.

A spot diameter of the infrared laser light is preferably 50 to 800 µm, more preferably 100 to 700 µm, and still more preferably 200 to 600 µm.

An overlap ratio of the infrared laser light is preferably 5 to 50%, and more preferably 10 to 40%.

### (E) Hydrophilization Step

This step is a step for hydrophilizing the entire gas channel surface of the molded article irradiated with the infrared laser light in step (D).

This hydrophilization treatment is only required to be applied to at least the gas channel surface in contact with water generated by power generation, but may be applied to the cooling surface as necessary.

The hydrophilization treatment is not particularly limited, but a sulfur trioxide gas treatment, a fluorine gas treatment, and a plasma treatment are preferable. Among these treatments, the plasma treatment is more preferable.

Examples of a method for performing hydrophilization by the sulfur trioxide gas treatment include a method for bringing a molded article into contact with a gas containing an anhydrous sulfuric acid gas, a fuming sulfuric acid gas, or the like. Among these methods, a method for bringing a molded article into contact with a gas containing an anhydrous sulfuric acid gas is preferable from a viewpoint of high reactivity with a substrate.

Examples of a method for performing hydrophilization by the fluorine gas treatment include a method for bringing a molded article into contact with a fluorine gas or a mixed gas containing a fluorine gas. Examples of the mixed gas include a mixed gas of a fluorine gas and an inert gas or an oxygen gas. Examples of the inert gas include a nitrogen gas and an argon gas.

Examples of a method for performing hydrophilization by the plasma treatment include a vacuum plasma treatment and an atmospheric pressure plasma treatment. Among these treatments, the atmospheric pressure plasma treatment requiring a simple apparatus and having good productivity is preferable, and particularly, a remote type atmospheric pressure glow discharge plasma treatment is more preferable.

Examples of a gas used for generating plasma include an oxygen gas containing an oxygen atom, an ozone gas, water, a nitrogen gas containing a nitrogen atom, an ammonia gas, a sulfur dioxide gas containing a sulfur atom, and a sulfur trioxide gas. Air can also be used. By performing the plasma treatment using these gases, a hydrophilic functional group such as a carbonyl group, a hydroxy group, an amino group, or a sulfo group can be introduced into a surface of a molded article to impart hydrophilic properties to the surface. Among these gases, a gas containing a nitrogen gas in an amount of 80% by volume or more is preferable, and a gas containing a nitrogen gas in an amount of 80% by volume or more and containing an oxygen gas as the balance is more preferable.

The fuel cell separator with a gasket obtained by the above manufacturing method has excellent hydrophilic properties and the hydrophilic properties last for a long time.

In addition, adhesion between the gasket and the separator is excellent. Therefore, peeling of the gasket hardly occurs even under a high temperature and high humidity environment during operation of a fuel cell, and sealing properties last for a long time.

Therefore, a fuel cell including the fuel cell separator with a gasket obtained by the manufacturing method of the present invention can maintain stable power generation efficiency over a long period of time.

Generally, in a solid polymer type fuel cell, many unit cells each including a pair of electrodes sandwiching a solid polymer film therebetween and a pair of separators forming a gas supply/discharge channel sandwiching these electrodes therebetween is arranged in parallel. However, as a part or the whole of the plurality of separators, the fuel cell separator with a gasket obtained by the manufacturing method of the present invention can be used.

### EXAMPLES

Hereinafter, the present invention is described more specifically with reference to Examples and Comparative Examples, but the present invention is not limited to the following Examples.

Physical properties in the following Examples were measured by the following methods.

### Average particle diameter

[1] An average particle diameter was measured with a particle size distribution measuring apparatus (manufactured by Nikkiso Co., Ltd.).

### Measurement of arithmetic average height Sa

[2] An arithmetic average height Sa defined by ISO 25178-2: 2012 was measured for each surface of a bottom part (recess) and a peak part (projection) of a groove of a gas channel of a fuel cell separator using a laser microscope (LEXT OLS 4100 manufactured by Olympus Co., Ltd.).

### Static contact angle of preform

[3] In the atmosphere, 5 µL of deionized water was dropped on a surface of the preform (other than the gasket part), and a static contact angle was measured using a contact angle meter (CA-DT-A type manufactured by Kyowa Interface Science Co., Ltd.).
(A) Example 1
   (1) Before a gasket was formed after a roughening treatment
   (2) After the gasket was formed
(B) Comparative Example 1
   (1) Before a gasket was formed after a preform was molded
   (2) After the gasket was formed
(C) Comparative Examples 2 and 3
   (1) Before a gasket was formed after a plasma treatment
   (2) After the gasket was formed

### Static contact angle of fuel cell separator

[4] In the atmosphere, 5 µL of deionized water was dropped on a surface of each of fuel cell separators of the following (1) and (2) (other than a gasket part), and a static contact angle was measured using a contact angle meter (CA-DT·A type manufactured by Kyowa Interface Science Co., Ltd.).
(1) Initial stage (one hour after manufacturing)
(2) After the fuel cell separator was immersed in deionized water at 90°C under a condition of deionized water: separator = 9:1 (mass ratio) for 5,000 hours, and then moisture on a surface of the separator which had been taken out was removed with a blower

### Peeling of gasket after immersion in hot water

[5] A fuel cell separator was immersed in hot water under the following condition (1), and then peeling of a gasket of the separator which had been taken out was visually observed.
(1) Immersion in deionized water at 90°C under a condition of
   deionized water: separator = 9:1 (mass ratio) for 5,000 hours

### [Example 1]

A binder component containing 100 parts by mass of artificial graphite powder (average particle diameter: 100 µm in particle size distribution d50), 20.5 parts by mass of o-cresol novolak type epoxy resin (epoxy equivalent: 204 g/eq, ICI viscosity at 150°C: 0.65 Pa·s), 10.5 parts by mass of novolac type phenol resin (hydroxy group equivalent: 103 g/eq, ICI viscosity at 150°C: 0.22 Pa·s), and 0.3 parts by mass of 2-phenylimidazole, and 0.2 parts by mass of carnauba wax as an internal releasing agent were put in a Henschel mixer, and were mixed at 800 rpm for 3 minutes to prepare a fuel cell separator composition.

The obtained composition was put in a mold for preparing a 200 mm × 200 mm fuel cell separator, and was press-molded under conditions of a mold temperature of 185°C, a molding pressure of 30 MPa, and molding time of 30 seconds to obtain a fuel cell separator preform with a groove serving as a gas channel on one surface.

Both surfaces (gas channel surface and the opposite surface thereto) of the obtained preform were roughened by wet blasting under a condition of a discharge pressure of 0.22 MPa using an alumina abrasive material (average particle diameter: 6 µm in particle size distribution d50).

Subsequently, an ethylene-propylene-diene rubber was applied to peripheral edge parts (sealing parts) of the roughened both surfaces by a screen printing method, and then the resulting product was heated and vulcanized at 175°C for 30 minutes to form a gasket.

Furthermore, a bottom part (recess) and a peak part (projection) of a groove of a gas channel on a gas channel surface of the preform (excluding the gasket part) were irradiated with infrared laser light under the following conditions. Thereafter, the entire gas channel surface (including the gasket part) was hydrophilized by an atmospheric pressure plasma treatment using a remote type atmospheric pressure glow discharge plasma generator (AP-T03 manufactured by Sekisui Chemical Co., Ltd.) under the following conditions to obtain a fuel cell separator with a gasket.

### [Irradiation conditions of infrared laser light]

(1) wavelength 1.064 µm, output 200 W, pulse width 60 ns, pulse energy 10 mJ
(2) spot diameter 500 µm, overlap ratio 15%

### [Atmospheric pressure plasma treatment condition]

(1) frequency 30 kHz, pulse width 9 µs, plasma electrode 550 mm, voltage 420 V, current 4.5 A
(2) plasma gas: nitrogen-oxygen mixed gas, nitrogen concentration 99.5% by volume (nitrogen gas flow rate 330 L/min, oxygen gas flow rate 1.5 L/min)

### [Comparative Example 1] A gasket surface was roughened.

A separator preform was manufactured in a similar manner to Example 1, and a gasket was formed on peripheral edge parts of both surfaces of the obtained preform in a similar manner to Example 1.

The entire gas channel surface (groove of the gas channel and the gasket part) of the preform with the gasket formed was roughened by wet blasting under similar conditions to Example 1, and subsequently was hydrophilized by an atmospheric pressure plasma treatment under similar conditions to Example 1 to obtain a fuel cell separator with a gasket.

### [Comparative Example 2] A gasket was laminated after a hydrophilization treatment.

A separator preform was manufactured in a similar manner to Example 1, and both surfaces of the obtained preform were roughened by wet blasting in a similar manner to Example 1.

Subsequently, a hydrophilization treatment by an atmospheric pressure plasma treatment was performed under similar conditions to Example 1, and a gasket was finally formed in a similar manner to Example 1 to obtain a fuel cell separator with a gasket.

### [Comparative Example 3] A hydrophilic layer was removed after a hydrophilization treatment, and a gasket was laminated.

A separator preform was manufactured in a similar manner to Example 1, and both surfaces of the obtained preform were roughened by wet blasting in a similar manner to Example 1.

Subsequently, a hydrophilization treatment by an atmospheric pressure plasma treatment was performed under similar conditions to Example 1. Thereafter, a bottom part (recess) and a peak part (projection) of a groove of a gas channel on a gas channel surface were masked with a masking tape, and surfaces of peripheral edge parts (sealing parts) of both surfaces of a molded article were subjected to an air blast treatment under the following conditions to remove a hydrophilic layer.

Finally, a gasket was formed in a similar manner to Example 1 to obtain a fuel cell separator with a gasket.

### [Air blast treatment condition]

### alumina abrasive material (particle size range 45 to 75 µm), injection pressure of abrasive material 0.25 MPa

Predetermined surface roughness, a static contact angle, and a peeling state of a gasket were measured and evaluated for each of the fuel cell separators with a gasket obtained in the above Examples and Comparative Examples.

**[Table 1]**

| | | Example | Comparative Example | | |
|---|---|---|---|---|---|
| | | 1 | 1 | 2 | 3 |
| Sa of gas channel projection | (µm) | 2.6 | 0.8 | 0.8 | 0.8 |
| Sa of gas channel recess | (µm) | 2.8 | 0.6 | 0.6 | 0.6 |
| Static contact angle before gasket lamination | (°) | 108 | 108 | 10 | 10 |
| Static contact angle after gasket lamination | (°) | 115 | 115 | 70 | 70 |
| Difference in static contact angle between before and after gasket lamination | (°) | 7 | 7 | 60 | 60 |
| Static contact angle before immersion in hot water | (°) | 10 | 10 | 70 | 70 |
| Static contact angle after immersion in hot water | (°) | 23 | 25 | 65 | 65 |
| Difference in static contact angle between before and after immersion test | (°) | 13 | 15 | -5 | -5.0 |
| Peeling of gasket after immersion in hot water | | Not observed | Observed | Observed | Not observed |

As illustrated in Table 1, in the fuel cell separator obtained in Example 1, the contact angle after immersion in hot water at 90°C for 5,000 hours was 23°, excellent hydrophilic properties were retained for a long time, and no peeling of a gasket was confirmed.

Meanwhile, in the separator in Comparative Example 1 in which a gasket was laminated without roughening a sealing part, adhesion between the separator and the gasket was insufficient, and the gasket was peeled off during immersion in hot water.

In Comparative Examples 2 and 3 in which a gasket was laminated after a hydrophilization treatment, the contact angle increased to 70° after lamination of the gasket, indicating that the hydrophilic properties were reduced. Furthermore, in Comparative Example 2 in which a hydrophilic layer in a sealing part was not removed before formation of a gasket, the gasket was peeled off during immersion in hot water.

## Claims

1. A method for manufacturing a fuel cell separator, comprising:
(A) a press molding step for press-molding a composition containing a graphite powder, an epoxy resin, and a phenol resin under heat in a mold to obtain a molded article having a groove serving as a gas channel on one or both surfaces;
(B) a roughening step for roughening the entire both surfaces of the molded article obtained in step (A);
(C) a gasket formation step for forming a gasket on a peripheral edge part of a gas channel surface having the groove serving as a gas channel in the roughened molded article obtained in step (B);
(D) a laser irradiation step for irradiating a portion of the gas channel surface, where the gasket is not formed, in the molded article with a gasket obtained in step (C), with infrared laser light; wherein in step (D) irradiation is performed over an entire part of the gas channel surface where the gasket is not formed; and
(E) a hydrophilization step for hydrophilizing the entire gas channel surface of the molded article irradiated with the infrared laser light in step (D).

2. The method for manufacturing a fuel cell separator according to claim 1, wherein the roughening treatment is an air blast treatment, a wet blast treatment, a barrel polishing treatment, or a brush polishing treatment.

3. The method for manufacturing a fuel cell separator according to claim 1 or 2, wherein irradiation with the infrared laser light is performed at pulse energy of 5 to 30 mJ and a spot diameter of 50 to 800 µm.

4. The method for manufacturing a fuel cell separator according to any one of claims 1 to 3, wherein the hydrophilization treatment is an atmospheric pressure plasma treatment.

5. The method for manufacturing a fuel cell separator according to any one of claims 1 to 4, wherein the graphite powder has an average particle diameter dso of 10 to 200 µm.

6. The method for manufacturing a fuel cell separator according to any one of claims 1 to 5, wherein the epoxy resin has an epoxy equivalent of 158 to 800 g/eq.

7. The method for manufacturing a fuel cell separator according to any one of claims 1 to 6, wherein the phenol resin has a hydroxyl group equivalent of 95 to 240g/eq.

## Patentansprüche

1. Verfahren zur Herstellung eines Brennstoffzellen-Separators, das Folgendes umfasst:
(A) einen Formpressschritt zum Formpressen einer Zusammensetzung, die ein Graphitpulver, ein Epoxidharz und ein Phenolharz enthält, unter Hitze in einer Form, um ein Formteil mit einer Rille, die als Gaskanal dient, auf einer oder beiden Oberflächen zu erhalten;
(B) einen Aufrauungsschritt, um die gesamten beiden Oberflächen des in Schritt (A) erhaltenen Formteils aufzurauen;
(C) einen Dichtungsbildungsschritt zum Ausbilden einer Dichtung auf einem Randkantenteil einer Gaskanaloberfläche, die die Rille, die als Gaskanal dient, aufweist, in dem in Schritt (B) erhaltenen aufgerauten Formteil;
(D) einen Laserbestrahlungsschritt zum Bestrahlen eines Teils der Gaskanaloberfläche, auf der die Dichtung nicht ausgebildet ist, in dem in Schritt (C) erhaltenen Formteil mit einer Dichtung mit Infrarot-Laserlicht; wobei in Schritt (D) die Bestrahlung über einen Gesamtteil der Gaskanaloberfläche, auf der die Dichtung nicht ausgebildet ist, durchgeführt wird; und
(E) einen Hydrophilierungsschritt zum Hydrophilieren der gesamten Gaskanaloberfläche des in Schritt (D) mit dem Infrarot-Laserlicht bestrahlten Formteils.

2. Verfahren zur Herstellung eines Brennstoffzellen-Separators nach Anspruch 1, wobei die Aufrauungsbehandlung eine Luftstoßbehandlung, eine Nassstrahlbehandlung, eine Trommelpolierbehandlung oder eine Bürstpolierbehandlung ist.

3. Verfahren zur Herstellung eines Brennstoffzellen-Separators nach Anspruch 1 oder 2, wobei die Bestrahlung mit dem Infrarot-Laserlicht in einer Impulsenergie von 5 bis 30 mJ und einem Spotdurchmesser von 50 bis 800 µm durchgeführt wird.

4. Verfahren zur Herstellung eines Brennstoffzellen-Separators nach einem der Ansprüche 1 bis 3, wobei die Hydrophilierungsbehandlung eine Atmosphärendruck-Plasma-Behandlung ist.

5. Verfahren zur Herstellung eines Brennstoffzellen-Separators nach einem der Ansprüche 1 bis 4, wobei das Graphitpulver einen mittleren Partikeldurchmesser d₅₀ von 10 bis 200 µm aufweist.

6. Verfahren zur Herstellung eines Brennstoffzellen-Separators nach einem der Ansprüche 1 bis 5, wobei das Epoxidharz ein Epoxidäquivalent von 158 bis 800 g/Äqu. aufweist.

7. Verfahren zur Herstellung eines Brennstoffzellen-Separators nach einem der Ansprüche 1 bis 6, wobei das Phenolharz ein Hydroxylgruppenäquivalent von 95 bis 240 g/Äqu. aufweist.

## Revendications

1. Procédé de fabrication d'un séparateur de pile à combustible, comprenant :
(A) une étape de moulage à la presse pour mouler à la presse une composition contenant une poudre de graphite, une résine époxy et une résine de phénol sous l'effet de la chaleur dans un moule afin d'obtenir un article moulé ayant une rainure servant de canal de gaz sur une ou les deux surfaces ;
(B) une étape de rugosification afin de rendre rugueuses la totalité des deux surfaces de l'article moulé obtenu à l'étape (A) ;
(C) une étape de formation de joint d'étanchéité pour former un joint d'étanchéité sur une partie de bord périphérique d'une surface de canal de gaz ayant la rainure servant de canal de gaz dans l'article moulé rendu rugueux obtenu à l'étape (B) ;
(D) une étape d'irradiation au laser afin d'irradier une partie de la surface de canal de gaz, où le joint d'étanchéité n'est pas formé, dans l'article moulé avec un joint d'étanchéité obtenu dans l'étape (C), à l'aide d'une lumière laser infrarouge ; dans lequel dans l'étape (D) l'irradiation est effectuée sur une partie entière de la surface de canal de gaz où le joint d'étanchéité n'est pas formé ; et
(E) une étape d'hydrophilisation afin d'hydrophiliser la totalité de la surface de canal de gaz de l'article moulé irradié avec la lumière laser infrarouge à l'étape (D).

2. Procédé de fabrication d'un séparateur de pile à combustible selon la revendication 1, dans lequel le traitement de rugosification est un traitement par soufflage d'air, un traitement par soufflage humide, un traitement par tonnelage, ou un traitement de polissage à brosse.

3. Procédé de fabrication d'un séparateur de pile à combustible selon la revendication 1 ou 2, dans lequel l'irradiation avec la lumière laser infrarouge est effectuée à une énergie d'impulsion de 5 à 30 mJ et un diamètre de point de 50 à 800 µm.

4. Procédé de fabrication d'un séparateur de pile à combustible selon l'une quelconque des revendications 1 à 3, dans lequel le traitement d'hydrophilisation est un traitement au plasma à pression atmosphérique.

5. Procédé de fabrication d'un séparateur de pile à combustible selon l'une quelconque des revendications 1 à 4, dans lequel la poudre de graphite a un diamètre de particule moyen d50 de 10 à 200 µm.

6. Procédé de fabrication d'un séparateur de pile à combustible selon l'une quelconque des revendications 1 à 5, dans lequel la résine époxy a un équivalent d'époxy de 158 à 800 g/éq.

7. Procédé de fabrication d'un séparateur de pile à combustible selon l'une quelconque des revendications 1 à 6, dans lequel la résine de phénol a un équivalent de groupe hydroxyle de 95 à 240 g/éq.
